# EUROPÄISCHE PATENTSCHRIFT

(11) **EP 4 265 085 B1**
(45) Veröffentlichungstag und Bekanntmachung des Hinweises auf die Patenterteilung: **14.08.2024**
(21) Anmeldenummer: 22169386.4
(22) Anmeldetag: 22.04.2022
(51) Int. Cl.: A01B 33/06, A01B 33/10, A01B 63/00, A01B 63/16, A01D 78/10

(54) **LANDWIRTSCHAFTLICHES ARBEITSGERÄT**
AGRICULTURAL TOOL
APPAREIL DE TRAVAIL AGRICOLE

(43) Veröffentlichungstag der Anmeldung: 25.10.2023
(73) Patentinhaber: Kverneland Group Kerteminde AS, 5300 Kerteminde (DK)
(72) Erfinder: Gohl, Stefan, 78244 Gottmadingen (DE); Salzer, Henning, 78244 Gottmadingen (DE)
(74) Vertreter: Grünecker Patent- und Rechtsanwälte PartG mbB

(56) Entgegenhaltungen:
- EP-A1- 2 238 823
- DE-A1- 102014 014 131
- DE-C2- 2 930 152
- DE-T2- 69 206 929

## Beschreibung

Die Erfindung betrifft ein landwirtschaftliches Arbeitsgerät gemäß dem Oberbegriff des Anspruchs 1.

Ein gattungsgemäßes landwirtschaftliches Arbeitsgerät ist beispielsweise in Form eines gezogenen Kreiselschwaders bekannt. Dieser kann einen vorderen und einen hinteren Rotor jeweils mit als Federzinken ausgebildeten Arbeitswerkzeugen umfassen, wobei die Rotoren auf separaten Fahrwerken gelagert sein können. Beispielsweise muss das Fahrwerk des hinteren Rotors dann von einer Arbeitsstellung mit abgesenkten Arbeitswerkzeugen in eine Transportstellung mit angehobenen Arbeitswerkzeugen separat ausgehoben werden. Dafür geeignete Vierradfahrwerke umfassen vordere und hintere Laufräder, wobei die hinteren den Bodenkontakt in der Transportstellung herstellen und die vorderen dann ausgehoben sind. Das Ausheben erfolgt vorzugsweise mit Hilfe einer Schwingenkonstruktion, die von einem Hydraulikzylinder verstellt wird. Da sich der Hydraulikzylinder unterhalb des dem Fahrwerk zugeordneten Rotors befindet, wird der Hydraulikzylinder in der Regel über eine durch die Drehachse des Rotors von oben nach unten geführte Hydraulikleitung betrieben.

Da die Höhenlage des Rotors bezüglich des Fahrwerks bei derartigen Arbeitsgeräten festgelegt ist, stellt man die Arbeitshöhe des Rotors (Höhenlage in der Arbeitsstellung bezüglich des befahrenen Untergrunds) beim gattungsgemäßen Arbeitsgerät bzw. Kreiselschwader ein, indem man die Positionen der Laufräder am Fahrwerk verstellt. Hierfür müssen zum einen die vorderen und hinteren Laufräder des Fahrwerks separat verstellt werden, und zum anderen ist dies nur bei entlastetem Fahrwerk möglich, also in der Transportstellung. Zudem muss die Höheneinstellung mit Werkzeugen unterhalb des Rotors manuell vorgenommen werden.

Das Einstellen der Arbeitshöhe des Rotors ist somit in der Praxis bisher sehr kompliziert, so dass dies oftmals nur bei der Erstinbetriebnahme erfolgt. Dies liegt unter anderem auch daran, dass sich die Höhenverstellung an den vorderen und hinteren Laufrädern gegenseitig beeinflusst, da dabei auch die Neigung des Arbeitsgeräts verändert wird. In der Praxis sind daher wiederholte Einstellschritte nötig, also ein schrittweises Verstellen der vorderen und hinteren Laufräder in der Transportstellung, ein Absenken in die Arbeitsstellung und Überprüfen der erzielten Einstellung gegebenenfalls mit wiederholter Korrektur der Einstellung. Dies ist aufgrund der Anordnung der Einstellmechanik unterhalb des Rotors unergonomisch und gefährlich. DE10 2014 014131 offenbart eine Heuwerbungsmaschine mit zumindest einem Rechkreisel, der um eine aufrechte Rechkreiselachse umlaufend antreibbar und von einem Tastfahrwerk am Boden abgestützt ist, wobei eine Höhenverstellvorrichtung zum Höhenverstellen des Tastfahrwerks entlang der Rechkreiselachse vorgesehen ist.

Es besteht Bedarf für demgegenüber verbesserte landwirtschaftliche Arbeitsgeräte, insbesondere Kreiselschwader, um die Höhenverstellung des Rotors für die Arbeitsstellung einfacher, sicherer und ergonomischer zu gestalten.

Die gestellte Aufgabe wird mit einem landwirtschaftlichen Arbeitsgerät nach Anspruch 1 gelöst. Bevorzugte Ausführungsformen sind in den Unteransprüchen angegeben.

Demnach umfasst das landwirtschaftliche Arbeitsgerät ein Fahrwerk, einen darauf gelagerten und um eine aufrechte Achse drehbaren Rotor mit Arbeitswerkzeugen und eine hydraulische Aushebevorrichtung zum Ausheben des Fahrwerks zwischen einer Arbeitsstellung und einer Transportstellung, bei welcher der Rotor bezüglich des befahrenen Untergrunds weiter ausgehoben ist als in der Arbeitsstellung. Die Aushebevorrichtung ist unterhalb des Rotors angeordnet und an eine von oben nach unten durch den Rotor geführte Hydraulikleitung angeschlossen. Zudem umfasst das landwirtschaftliche Arbeitsgerät eine Einstellmechanik zur Höhenverstellung des Rotors für die Arbeitsstellung, oder anders gesagt zur Verstellung der Arbeitshöhe des Rotors.

Erfindungsgemäß umfasst die Einstellmechanik ein die Hydraulikleitung umgebendes oder abschnittsweise ausbildendes rohrförmiges Stellelement mit wenigstens einem den Rotor und das Fahrwerk gegenseitig tragend abstützenden axialen Stellgewinde und eine oberhalb des Rotors angeordnete Betätigungsvorrichtung zum axialen und insbesondere werkzeuglosen Verdrehen des Stellelements. Das Stellelement kann von der Betätigungsvorrichtung um die Drehachse des Rotors beispielsweise mittels eines Handrads, einer Kurbel oder eines Antriebsmotors gedreht werden, um mittels des Stellgewindes die Höhenlage des Rotors in der Arbeitsstellung bezüglich des ihn tragenden Fahrwerks einzustellen.

Die Arbeitshöhe des Rotors kann somit auf seiner Oberseite mittels der Betätigungsvorrichtung ergonomisch eingestellt werden. Zudem erfolgt die Höhenverstellung des Rotors relativ zum Fahrwerk insgesamt, so dass vordere und hintere Laufräder eines Vierradfahrwerks nicht mehr separat verstellt werden müssen. Somit ist eine Höhenverstellung des Rotors möglich, ohne gleichzeitig seine Neigung zu verändern. Wiederholte Korrekturen sind bei der Höheneinstellung daher in der Regel nicht mehr erforderlich.

Die Hydraulikleitung ist vorzugsweise starr zur axial tragenden Verbindung bzw. gegenseitigen Abstützung des Rotors und des Fahrwerks ausgebildet. Dies ermöglicht eine kompakte Bauform.

Das rohrförmige Stellelement ermöglicht beispielsweise eine Höhenverstellung um 30 bis 150 mm.

Als Stellgewinde eignet sich beispielsweise der Typ M22 x 1,5 und/oder M16 x 1,5. Ebenfalls ist eine Kombination aus unterschiedlichen Gewindesteigungen möglich und/oder eine Kombination von Rechts- und Linksgewinde.

Vorzugsweise ist das rohrförmige Stellelement eine die Hydraulikleitung umgebende Gewindebuchse mit einem Innengewinde (erstes Stellgewinde), das mit einem an der Hydraulikleitung ausgebildeten Außengewinde zusammenwirkt. Durch Verdrehen der Gewindebuchse lässt sich somit in Abhängigkeit von der Gewindesteigung ein axialer Hub der Hydraulikleitung bewirken, ohne diese mit der Gewindebuchse mitzudrehen. Dies ermöglicht einen konstruktiv einfachen Anschluss der Hydraulikleitung oberhalb und unterhalb des Rotors und eine Verstellbarkeit unter Last.

Vorzugsweise umfasst die Gewindebuchse ferner ein gegenläufiges Außengewinde (zweites Stellgewinde), das mit einem Innengewinde tragend zusammenwirkt, welches drehfest an einer Rotorachse oder einem Gehäuse angeordnet ist, welche(s) zur Lagerung des Rotors ausgebildet ist. Darunter ist zu verstehen, dass das Innengewinde und das Außengewinde der Gewindebuchse zueinander gegenläufig ausgebildet sind. Durch Verdrehen der Gewindebuchse lässt sich so ein erster Relativhub zwischen dieser und der Hydraulikleitung bewirken sowie gleichzeitig ein zweiter Relativhub zwischen der Gewindebuchse und der Rotorachse (dem Gehäuse) zur Lagerung des Rotors. Die Hydraulikleitung dreht sich bei Höhenverstellung des Rotors mit der Gewindebuchse nicht mit.

Die von den Gewindesteigungen des Innen- und Außengewindes der Gewindebuchse bei deren Drehung verursachten Teilhübe addieren sich zu einem Gesamthub der Höhenverstellung, was eine kompakte Bauweise und schnelle Höhenanpassung ermöglicht.

Bei einer weiteren günstigen Ausführungsform ist die Gewindebuchse auf ihrer Außenseite in fester Höhenlage drehbar an einer Rotorachse oder einem Gehäuse gelagert, welche(s) ferner zur Lagerung des Rotors ausgebildet ist. In diesem Fall bleibt nicht nur die Gewindebuchse, sondern auch die ihr zugeordnete Betätigungsvorrichtung in bezüglich des Rotors festgelegter Höhenlage. Somit kann die Betätigungsvorrichtung relativ einfach im Bereich des Rotors angeordnet werden, beispielsweise am sogenannten Rotorkopf. Dies begünstigt auch einen motorischen Antrieb der Betätigungsvorrichtung.

Vorzugsweise ist die Hydraulikleitung insgesamt mit dem Stellelement nicht mitdrehend befestigt. Dies erleichtert den beiderseitigen hydraulischen Anschluss an fest verlegte Druckschläuche oder dergleichen.

Bei einer weiteren günstigen Ausführungsform ist das Stellelement in Form einer Hohlspindel (starre rohrförmige Spindel mit Außengewinde) als Bestandteil der Hydraulikleitung ausgebildet, wobei diese dann an ihren Enden hydraulische Drehdurchführungen umfasst. Im Gegensatz zu den voranstehend beschriebenen Ausführungsformen dreht sich die starre Hydraulikleitung bei der Höhenverstellung des Rotors dann zwangsläufig mit. Entsprechend ermöglichen hydraulische Drehdurchführungen einen nicht mitdrehenden Anschluss der Hydraulikleitung auf der Oberseite und Unterseite des Rotors zu Druckschlauchleitungen oder dergleichen Leitungen beispielsweise zur hydraulischen Aushebevorrichtung. Tragendes Stellelement und Hydraulikleitung lassen sich somit vergleichsweise einfach und platzsparend in Form der Hohlspindel bereitstellen.

Vorzugsweise umfasst die Betätigungsvorrichtung ein mit dem Stellelement verbundenes Kegelradgetriebe oder Schneckenradgetriebe. Dies ermöglich eine vergleichsweise einfache manuelle Höhenverstellung mittels einer Handkurbel oder eines motorischen Antriebs.

Vorzugsweise umfasst die Betätigungsvorrichtung einen elektrischen Antriebsmotor. Dieser ermöglicht eine flexible und schnelle Höhenverstellung des Rotors beispielsweise in unterschiedlichen Arbeitssituationen und macht ein manuelles Verstellen der Arbeitshöhe entbehrlich. Zudem ist das Einstellen zuvor gespeicherter Arbeitshöhen mittels einer zugeordneten elektronischen Steuereinheit möglich.

Bei einer weiteren günstigen Ausführungsform umfasst die Betätigungsvorrichtung ein koaxial am Stellelement festgelegtes Handrad. Dieses ist vergleichsweise kompakt und kann in vorteilhafter Weise dauerhaft am Rotorkopf befestigt sein.

Vorzugsweise ist die Einstellmechanik zur Höhenverstellung / Einstellung der Arbeitshöhe unter einer in der Arbeitsstellung einwirkenden Eigenlast des Rotors ausgebildet. Es ist dann nicht mehr erforderlich, dass Fahrwerk zur Höhenverstellung des Rotors zu entlasten bzw. auszuheben. Eingestellte Arbeitshöhen können somit einfach und schnell überprüft werden. Die Höheneinstellung kann über dem Rotor mittels eine Skala, die beispielsweise von einem zugeordneten Schlepper aus und somit von dessen Fahrer aus der Ferne lesbar ausgebildet ist, angezeigt werden.

Vorzugsweise umfasst das Fahrwerk vordere und hintere Laufräder, ist also als Vierradfahrwerk ausgebildet, wobei die hinteren Laufräder in der Transportstellung Bodenkontakt haben und die vorderen Laufräder dabei ausgehoben sind. Damit lässt sich eine effektive Aushebevorrichtung bereitstellen, die mit der beschriebenen Einstellmechanik besonders vorteilhaft zusammenwirkt.

Vorzugsweise umfasst das Fahrwerk eine Schwinge mit daran gelagerten Laufrädem, wobei die Aushebevorrichtung wenigstens einen Hydraulikzylinder zum Schwenken der Schwinge umfasst. Auch dies dient einer Aushebevorrichtung, die sich mit der erfindungsgemäßen Einstellmechanik besonders gut kombinieren lässt.

Vorzugsweise ist das landwirtschaftliche Arbeitsgerät ein gezogener Kreiselschwader. Dieser umfasst dann vorzugsweise einen vorderen und einen hinteren Rotor, wobei das beschriebene Fahrwerk und die Einstellmechanik dem hinteren Rotor separat zugeordnet sind. Da die Einstellmechanik am hinteren Rotor relativ weit von einem zugeordneten Schlepper entfernt ist, wirkt sie besonders vorteilhaft mit der Aushebevorrichtung zusammen. Das landwirtschaftliche Arbeitsgerät gemäß wenigstens einer der beschriebenen Ausführungsformen könnte beispielsweise aber auch ein gezogener Kreiselheuer sein.

Bevorzugte Ausführungsformen der Erfindung sind zeichnerisch dargestellt. Es zeigen:
- Figur 1A und 1B: eine seitliche Darstellung des landwirtschaftlichen Arbeitsgeräts in einer Arbeitsstellung und in einer Transportstellung;
- Figur 2A bis 2C: eine erste Ausführungsform der Einstellmechanik mit Rotor und Fahrwerk;
- Figur 3A und 3B: eine zweite Ausführungsform der Einstellmechanik mit Rotor und Fahrwerk; und
- Figur 4A bis 4C: eine dritte Ausführungsform der Einstellmechanik mit Rotor und Fahrwerk.

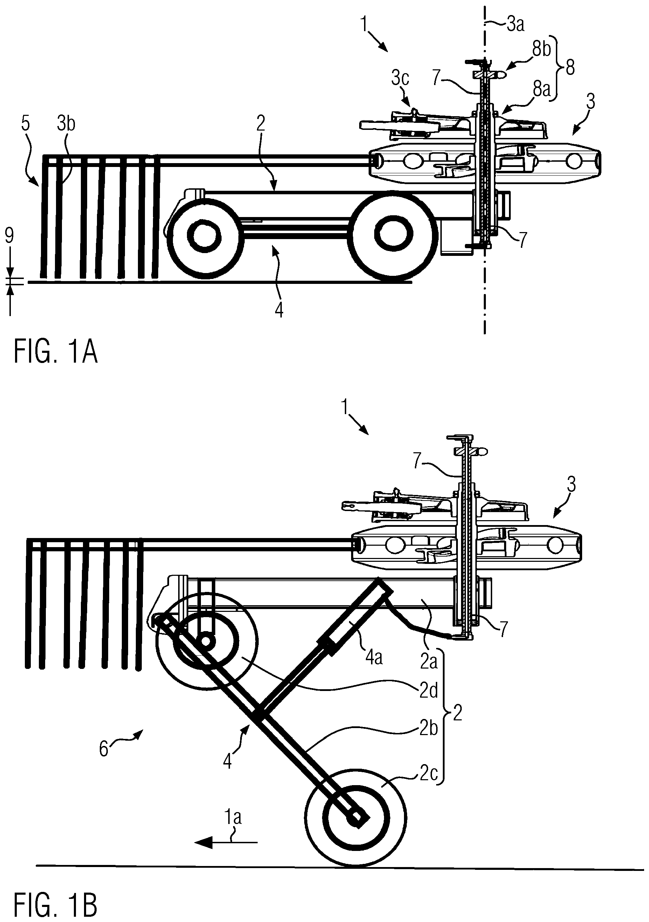

Wie die Figuren 1A und 1B erkennen lassen, umfasst das landwirtschaftliche Arbeitsgerät 1, bei dem es sich im Beispiel um einen gezogenen Kreiselschwader handelt, ein Fahrwerk 2, ein darauf gelagerten und um eine aufrechte Achse 3a drehbaren Rotor 3 mit Arbeitswerkzeugen 3b, bei denen es sich im Beispiel um Federzinken handelt, und eine hydraulische Aushebevorrichtung 4 zum Ausheben des Fahrwerks 2 zwischen einer in der Figur 1A beispielhaft dargestellten Arbeitsstellung 5 und einer in der Figur 1B beispielhaft dargestellten Transportstellung 6. Der Rotor 3 ist insbesondere der hintere Rotor eines Zweikreiselschwaders.

Zu erkennen ist ferner ein oberhalb des Rotors 3 auf prinzipiell bekannte Weise in einem Getriebekopf angeordneter Antrieb 3c für den Rotor 3. Die Fahrtrichtung 1a (hinter einem nicht dargestellten Schlepper) ist durch einen Pfeil in der Figur 1B schematisch angedeutet.

Die Aushebevorrichtung 4 ist unterhalb des Rotors 3 angeordnet und an eine von oben nach unten durch den Rotor 3 geführte rohrförmige Hydraulikleitung 7 angeschlossen, beispielsweise mittels einer prinzipiell bekannten und daher nicht weiter beschriebenen Druckschlauchleitung.

Das Arbeitsgerät 1 umfasst ferner eine Einstellmechanik 8 zur Höhenverstellung des Rotors 3 in der Arbeitsstellung 5 bezüglich des Fahrwerks 2. Hierzu umfasst die Einstellmechanik 8 zum einen ein die Hydraulikleitung 7 umgebendes oder abschnittsweise ausbildendes rohrförmiges Stellelement 8a und eine oberhalb des Rotors 3 angeordnete Betätigungsvorrichtung 8b zum Drehen des Stellelements 8a um die Achse 3a. Damit lässt sich eine in der Arbeitsstellung 5 wirksame Arbeitshöhe 9 des Rotors 3 einstellen, indem dieser bezüglich des insgesamt vollständig abgesenkten Fahrwerks 2 linear angehoben oder abgesenkt wird.

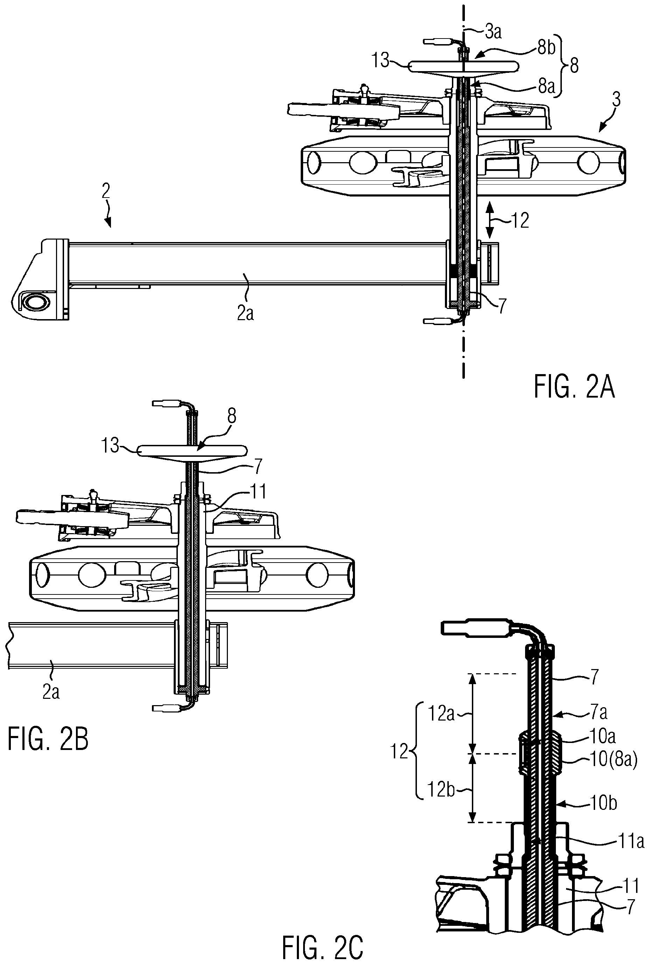

Wie die Figuren 2A bis 2C für eine erste bevorzugte Ausführungsform der Einstellmechanik 8 erkennen lassen, kann das rohrförmige Stellelement 8a als die Hydraulikleitung 7 umgebende Gewindebuchse 10 ausgebildet sein mit einem Innengewinde (ersten Stellgewinde) 10a, welches mit einem an der starren Hydraulikleitung 7 ausgebildeten Außengewinde 7a zusammenwirkt. Hierfür eignet sich beispielsweise ein Gewinde vom Typ M16 x 1,5_L.

Ferner kann die Gewindebuchse 10 ein Außengewinde (zweites Stellgewinde) 10b umfassen, welches mit einem an einer Rotorachse 11, einem Getriebegehäuse oder dergleichen feststehenden Struktur zur Lagerung des Rotors 3 ausgebildeten Innengewinde 11a zusammenwirkt. Hierfür eignet sich beispielsweise ein Gewinde vom Typ M22 x 1,5_R.

Somit stützen sich Fahrwerk 2 und Rotor 3 gegenseitig über die Hydraulikleitung 7, die Gewindebuchse 10 und die nicht mitdrehende Rotorachse 11 oder dergleichen Tragstruktur ab.

Das Innengewinde 10a und das Außengewinde 10b der Gewindebuchse 10 sind gegenläufig ausgebildet (beispielsweise außen ein Rechts- und innen ein Linksgewinde oder umgekehrt). Verdrehen der Gewindebuchse 10 bewirkt dann gleichzeitig einen ersten Teilhub 12a zwischen der Hydraulikleitung 7 und der Gewindebuchse 10 und einen zweiten Teilhub 12b zwischen der Gewindebuchse 10 und der Rotorachse 11. Die Teilhübe 12a, 12b addieren sich somit zu einem Einstellhub 12 zwischen der Rotorachse 11 mit dem daran vertikal festgelegten Rotor 3 zum einen und dem Rahmen 2 mit der diesbezüglich vertikal festgelegten Hydraulikleitung 7 zum anderen.

Die Hydraulikleitung 7 dreht sich bei der Höhenverstellung dann insgesamt nicht mit, so dass Druckschläuche oder dergleichen am Arbeitsgerät 1 verlegte Leitungen auf unkomplizierte Weise direkt angeschlossen werden können.

Der Einstellhub 12 beträgt beispielsweise 30 bis 150 mm. Dies lässt sich durch Kombination der Teilhübe 12a, 12b in kompakter Bauweise erreichen.

In der Figur 2A ist der Rotor 3 in seiner bezüglich des Fahrwerks 2 obersten Stellung und somit bei maximaler Arbeitshöhe 9 dargestellt, in der Figur 2B in seiner untersten Stellung und somit bei minimaler Arbeitshöhe 9.

In den Figuren 2A und 2B ist dargestellt, dass die Betätigungsvorrichtung 8b ein Handrad 13 umfassen kann, welches koaxial zur Achse 3a an dem rohrförmigen Stellelement 8a / der Gewindebuchse 10 befestigt ist. In der Figur 2C fehlt das Handrad 13 der Übersichtlichkeit halber.

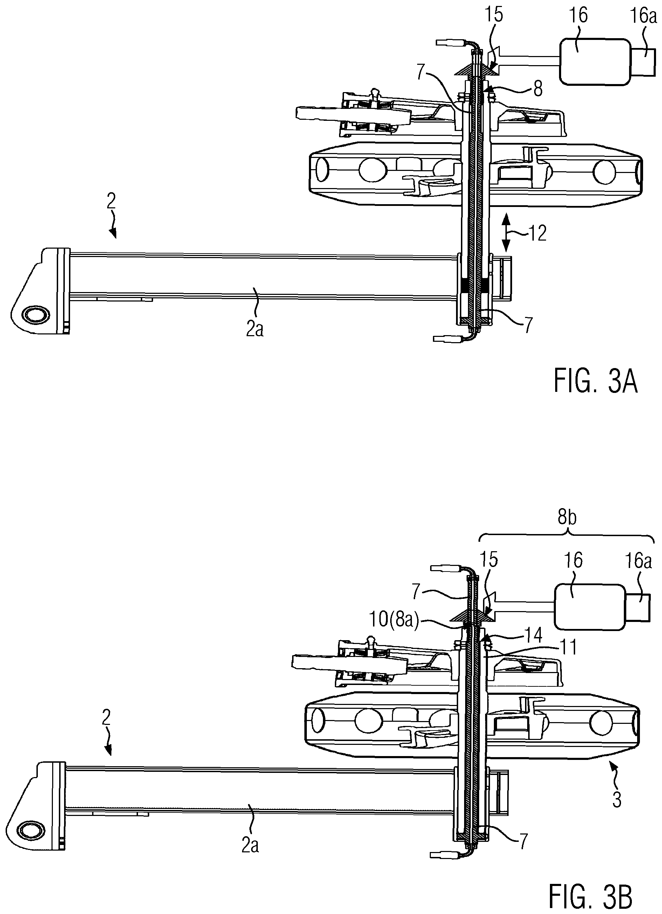

Die Figuren 3A und 3B zeigen eine zweite bevorzugte Ausführungsform der Einstellmechanik 8, die sich im Wesentlichen von der zuvor beschriebenen Ausführungsform dadurch unterscheidet, dass sich die Gewindebuchse 10 und die Rotorachse 11 gegenseitig nicht durch Gewinde abstützen, sondern mittels eines vertikal (axial) festgelegten Lagers 14. Die Gewindebuchse 10 umfasst dann kein Außengewinde (zweites Stellgewinde) 10b.

Die Arbeitshöhe 9 des Rotors 3 bezüglich der Hydraulikleitung 7 und des Fahrwerks 2 wird dann entsprechend nur mittels des Innengewindes (ersten Stellgewindes) 10a der Gewindebuchse 10 und des Außengewindes 7a der starren Hydraulikleitung 7 verstellt, die sich dabei aber ebenso nicht mitdreht.

Entsprechend ist der Einstellhub 12 bei dieser Ausführungsform identisch mit dem zuvor beschriebenen ersten Teilhub 12a.

Wie die Figuren 3A und 3B ferner schematisch erkennen lassen, kann die Betätigungsvorrichtung 8b ein Kegelradgetriebe 15 umfassen und/oder einen Antriebsmotor 16, um die Einstellmechanik 8 motorisch und gegebenenfalls automatisch zu betätigen. Diese Kombination ist aber nur als Beispiel zu verstehen. So ließe sich der Antriebsmotor 16 auch über ein anderweitiges Getriebe an das rohrförmige Stellelement 8a anbinden. Ebenso ließe sich das Kegelradgetriebe 15 auch manuell mittels einer Handkurbel oder dergleichen antreiben.

Dem Antriebsmotor 16 ist vorzugsweise eine elektronische Steuereinheit 16a zugeordnet, mit der sich beispielsweise infolge Programmierung unterschiedliche Arbeitshöhen 9 gezielt und reproduzierbar anfahren lassen. Die Bedienung wäre dann beispielsweise über Funk auch von einem Schlepper aus möglich. Es versteht sich, dass die Steuereinheit 16a nicht in Nachbarschaft zum Antriebsmotor 16 angeordnet sein muss.

Ein Vorteil der zweiten Ausführungsform der Einstellmechanik 8 liegt darin, dass die Betätigungsvorrichtung 8b, also beispielsweise das Kegelradgetriebe 15 und der Antriebsmotor 16, aufgrund des fehlenden zweiten Teilhubs 12b in fester Höhenlage bezüglich des Rotors 3 und der Rotorachse 11 oder dergleichen Tragstruktur für den Rotor 3 angeordnet werden können. Dies kann bei einem motorischen Antrieb der Einstellmechanik 8 besonders vorteilhaft sein.

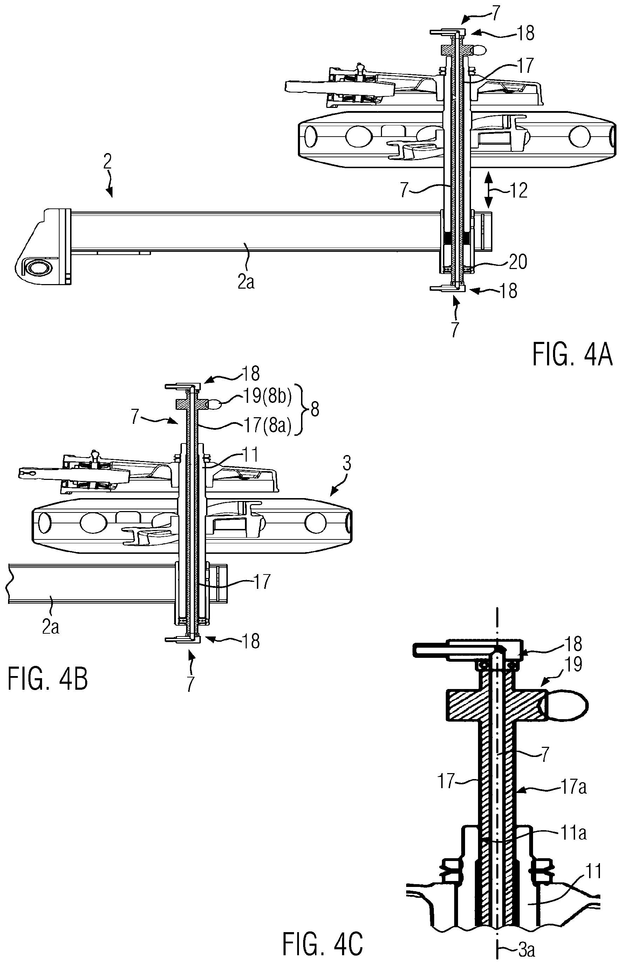

Die Figuren 4A bis 4C zeigen eine dritte bevorzugte Ausführungsform der Einstellmechanik 8, die sich von den zuvor beschriebenen Ausführungsformen im Wesentlichen dadurch unterscheidet, dass das rohrförmige Stellelement 8a als Hohlspindel 17 ausgebildet ist, die einen tragenden Abschnitt der Hydraulikleitung 7 ausbildet und sich bei der beschriebenen Höhenverstellung des Rotors 3 um die Achse 3a dreht.

Die starre Hohlspindel 17 umfasst ein Außengewinde (drittes Stellgewinde als Alternative zum ersten und gegebenenfalls zweiten Stellgewinde) 17a, das auf die zuvor beschriebene Weise bei der Höhenverstellung mit einem an der nicht mitdrehenden Rotorachse 11 oder dergleichen Tragstruktur ausgebildeten Innengewinde 11a zusammenwirkt. Entsprechend ist der Einstellhub 12 bei dieser Ausführungsform identisch mit dem zuvor beschriebenen zweiten Teilhub 12b.

Bei dieser Ausführungsform umfasst die Hydraulikleitung 7 am oberen und unteren Ende der starren Hohlspindel 17 anschließende Drehdurchführungen 18, die jeweils einen druckdichten Anschluss zu bei der Höhenverstellung nicht mitdrehenden Druckschläuchen oder dergleichen Leitungen herstellen. Wie in der Figur 4A angedeutet ist, wird die Hohlspindel 17 nach unten von einem Axiallager 20 am Träger 2a abgestützt.

Die Betätigungsvorrichtung 8b kann beispielsweise ein Schneckenradgetriebe 19 umfassen, das in den Figuren 4A bis 4C lediglich beispielhaft und schematisch angedeutet ist. Dieses könnte beispielsweise mittels einer (nicht dargestellten) Handkurbel angetrieben werden oder motorisch.

Es versteht sich, dass die beschriebenen Ausführungsformen der Betätigungsvorrichtung 8b mit sämtlichen beschriebenen Ausführungsformen des rohrförmigen Stellelements 8a kombiniert werden können. Entscheidend ist hierbei, dass die Betätigungsvorrichtung 8b jeweils oberhalb des Rotors 3 angeordnet und somit für einen Bediener einfach und ergonomisch zugänglich ist oder einen einfachen motorischen Antrieb erlaubt. Zudem bewirkt das rohrförmige Stellelement 8a in sämtlichen Ausführungsformen eine lineare Höhenverstellung des Rotors 3 bezüglich des Fahrwerks 2 ohne Änderung der Rotorneigung, so dass schrittweise Überprüfung und Korrektur der vorgenommenen Höheneinstellung entbehrlich sind.

Zudem ermöglichen die je nach Ausführungsform erfindungsgemäß vorhandenen Stellgewinde 10a und gegebenenfalls 10b zum einen oder 17a zum anderen jeweils eine Anpassung der Arbeitshöhe 9 bei in die Arbeitsstellung 5 abgesenktem Fahrwerk 2 und somit unter der vom Rotor 3 verursachten Eigenlast. Das Fahrwerk 2 muss daher für die Einstellung der Arbeitshöhe 9 nicht mehr ausgehoben und entlastet werden. Vielmehr können mittels der Einstellmechanik 8 vorgenommene Einstellungen der Arbeitshöhe 9 sofort in der Arbeitsstellung 5 kontrolliert und gegebenenfalls korrigiert werden.

Wie insbesondere die Figur 1B erkennen lässt, handelt es sich bei dem landwirtschaftlichen Arbeitsgerät 1 beispielsweise um einen Kreiselschwader, wobei dem Rotor 3 ein separates Fahrwerk 2 zugeordnet ist, welches einen prinzipiell bekannten Träger 2a zur Lagerung des Rotors 3 am Fahrwerk 2 und eine diesbezüglich schwenkbare Schwinge 2b umfasst mit daran gelagerten hinteren Laufrädern 2c. Diesen im Sinne eines Vierradfahrwerks zugeordnete vordere Laufräder 2d sind dagegen vorzugsweise in fester Höhenlage bezüglich des Trägers 2a gelagert.

Das Fahrwerk 2 umfasst die Aushebevorrichtung 4 mit wenigstens einem prinzipiell bekannten Hydraulikzylinder 4a, der an die Schwinge 2b gekoppelt ist, um diese bezüglich des Trägers 2a zu positionieren. Beim Abspreizen der Schwinge 2b wird der Träger 2a mit den vorderen Laufrädern 2d und dem Rotor 3 in die Transportstellung 6 ausgehoben, wobei die hinteren Laufräder 2c auf bekannte Weise permanent Bodenkontakt herstellen. Derartige Aushebevorrichtungen 4 sind bewährt und lassen sich einfach mit der erfindungsgemäßen Einstellmechanik 8 kombinieren.

Besonders vorteilhaft ist eine derartige Kombination von Einstellmechanik 8 und Aushebevorrichtung 4 an einem gegebenenfalls hinteren Rotor 3 und Fahrwerk 2 eines gezogenen Kreiselschwaders mit wenigstens einem Rotor 3. In diesem Fall kann ein vergleichsweise weit von einem zugeordneten Schlepper (nicht dargestellt) entfernter Rotor 3 zum einen mit der Aushebevorrichtung 4 auf bewährte Weise in die Transportstellung 6 gestellt und zum anderen seine Arbeitshöhe 9 in der abgesenkten Arbeitsstellung 5 einfach und ergonomisch eingestellt werden.

Alternativ zum beschriebenen Kreiselschwader ließe sich die beschriebene Einstellmechanik 8 auch an anderen landwirtschaftlichen Arbeitsgeräten mit entsprechend um im Wesentlichen aufrechte Achsen rotierenden Arbeitsgeräten und einer diesbezüglich koaxialen Hydraulikleitung einsetzen, beispielsweise an einem Kreiselheuer. Dieser kann beispielsweise in der EP 0 627 878 A1, DE 29 30 152 A1 und/oder DE 196 19 172 A1 beschriebene Merkmale aufweisen.

## Patentansprüche

1. Landwirtschaftliches Arbeitsgerät (1) umfassend: ein Fahrwerk (2); einen darauf gelagerten und um eine aufrechte Achse (3a) drehbaren Rotor (3) mit Arbeitswerkzeugen (3b); eine hydraulische Aushebevorrichtung (4) zum Ausheben des Fahrwerks zwischen einer Arbeitsstellung (5) und einer Transportstellung (6), wobei die Aushebevorrichtung unterhalb des Rotors angeordnet und an eine Hydraulikleitung (7) angeschlossen ist; und eine Einstellmechanik (8) zur Höhenverstellung des Rotors für die Arbeitsstellung, wobei die Einstellmechanik umfasst: ein rohrförmiges Stellelement (8a) mit wenigstens einem den Rotor und das Fahrwerk gegenseitig abstützenden axialen Stellgewinde; und eine oberhalb des Rotors angeordnete Betätigungsvorrichtung (8b) zum axialen und insbesondere werkzeuglosen Verdrehen des Stellelements, **dadurch gekennzeichnet, dass** die Hydraulikleitung (7) von oben nach unten durch den Rotor geführt ist und, dass das Stellelement (8a) die Hydraulikleitung umgibt oder abschnittsweise ausbildet.

2. Landwirtschaftliches Arbeitsgerät nach Anspruch 1, wobei die Hydraulikleitung (7) zur gegenseitigen axialen Abstützung des Rotors (3) und des Fahrwerks (2) ausgebildet ist.

3. Landwirtschaftliches Arbeitsgerät nach Anspruch 1 oder 2, wobei das Stellelement (8a) eine die Hydraulikleitung (7) umgebende Gewindebuchse (10) mit einem Innengewinde (10a) ist, das mit einem an der Hydraulikleitung ausgebildeten Außengewinde (7a) zusammenwirkt.

4. Landwirtschaftliches Arbeitsgerät nach Anspruch 3, wobei die Gewindebuchse (10) ferner ein gegenläufiges Außengewinde (10b) aufweist, das mit einem Innengewinde (11a) zusammenwirkt, welches drehfest an einer Rotorachse (11) oder einem Gehäuse zur Lagerung des Rotors (3) angeordnet ist.

5. Landwirtschaftliches Arbeitsgerät nach Anspruch 3, wobei die Gewindebuchse (10) auf ihrer Außenseite in bezüglich des Fahrwerks (2) fester Höhenlage drehbar an einer Rotorachse (11) oder einem Gehäuse zur Lagerung des Rotors (3) gelagert ist.

6. Landwirtschaftliches Arbeitsgerät nach einem der vorigen Ansprüche, wobei die Hydraulikleitung (7) insgesamt mit dem Stellelement (8a) nicht mitdrehend angeordnet ist.

7. Landwirtschaftliches Arbeitsgerät nach Anspruch 1 oder 2, wobei das Stellelement (8a) in Form einer Hohlspindel (17) als Bestandteil der Hydraulikleitung (7) ausgebildet ist, und wobei diese an ihren Enden hydraulische Drehdurchführungen (18) umfasst.

8. Landwirtschaftliches Arbeitsgerät nach einem der vorigen Ansprüche, wobei die Betätigungsvorrichtung (8b) ein mit dem Stellelement (8a) verbundenes Kegelradgetriebe (15) oder Schneckenradgetriebe (19) umfasst.

9. Landwirtschaftliches Arbeitsgerät nach einem der vorigen Ansprüche, wobei die Betätigungsvorrichtung (8b) einen elektrischen Antriebsmotor (16) umfasst.

10. Landwirtschaftliches Arbeitsgerät nach einem der Ansprüche 1 bis 7, wobei die Betätigungsvorrichtung (8b) ein koaxial am Stellelement (8a) festgelegtes Handrad (13) umfasst.

11. Landwirtschaftliches Arbeitsgerät nach wenigstens einem der vorigen Ansprüche, wobei die Einstellmechanik (8) zur Höhenverstellung unter einer in der Arbeitsstellung (5) einwirkenden Eigenlast des Rotors (3) ausgebildet ist.

12. Landwirtschaftliches Arbeitsgerät nach wenigstens einem der vorigen Ansprüche, wobei das Fahrwerk (2) vordere und hintere Laufräder umfasst, und wobei die hinteren Laufräder (2c) in der Transportstellung (6) Bodenkontakt haben und die vorderen Laufräder (2d) dabei ausgehoben sind.

13. Landwirtschaftliches Arbeitsgerät nach wenigstens einem der vorigen Ansprüche, wobei das Fahrwerk (2) eine Schwinge (2b) mit daran gelagerten Laufrädern (2c) umfasst, und wobei die Aushebevorrichtung (4) wenigstens einen Hydraulikzylinder (4a) zum Schwenken der Schwinge umfasst.

14. Landwirtschaftliches Arbeitsgerät nach wenigstens einem der vorigen Ansprüche, welches ein gezogener Kreiselschwader ist.

15. Landwirtschaftliches Arbeitsgerät nach Anspruch 14, wobei der Kreiselschwader einen vorderen und einen hinteren Rotor umfasst, und wobei das Fahrwerk (2) und die Einstellmechanik (8) dem hinteren Rotor (3) separat zugeordnet sind.

## Claims

1. Agricultural implement (1) comprising: a chassis (2); a rotor (3) mounted thereon that is rotatable about an upright axis (3a) and comprises working tools (3b); a hydraulic lifting device (4) for lifting said chassis between a work position (5) and a transport position (6), where said lifting device is arranged underneath said rotor and connected to a hydraulic line (7); and an adjustment mechanism (8) for adjusting the height of said rotor for the work position, wherein said adjustment mechanism comprises: a tubular actuating element (8a) with at least one axial adjustment thread mutually supporting said rotor and said chassis; and an operating device (8b) arranged above said rotor for turning said actuating element axially, in particular without tools, **characterized in that**, the hydraulic line (7) is run from top to bottom through said rotor and, that the actuating element (8a) surrounding said hydraulic line or forming sections thereof.

2. Agricultural implement according to claim 1, where said hydraulic line (7) is formed for mutual axial support of said rotor (3) and said chassis (2).

3. Agricultural implement according to claim 1 or 2, where said actuating element (8a) is a threaded bushing (10) surrounding said hydraulic line (7) with an internal thread (10a) which interacts with an external thread (7a) formed at said hydraulic line.

4. Agricultural implement according to claim 3, where said threaded bushing (10) further comprises an external thread (10b) in the opposite direction which interacts with an internal thread (11a) which is arranged in a rotationally fixed manner at a rotor axis (11) or a housing that is formed for mounting said rotor (3).

5. Agricultural implement according to claim 3, where said threaded bushing (10) is mounted on its outer side to be rotatable at a fixed height on a rotor axis (11) or a housing that is formed for mounting said rotor (3).

6. Agricultural implement according to one of the preceding claims, where said hydraulic line (7) is arranged to not co-rotate overall with said actuating element (8a).

7. Agricultural implement according to claim 1 or 2, where said actuating element (8a) is configured in the form of a hollow spindle (17) as a component of said hydraulic line (7), and where the latter comprises hydraulic rotary feedthroughs (18) at its ends.

8. Agricultural implement according to one of the preceding claims, where said operating device (8b) comprises a bevel gear (15) or worm gear (19) connected to said actuating element (8a).

9. Agricultural implement according to one of the preceding claims, where said operating device (8b) comprises an electric drive motor (16).

10. Agricultural implement according to one of claims 1 to 7, where said operating device (8b) comprises a hand wheel (13) affixed coaxially to said actuating element (8a).

11. Agricultural implement according to at least one of the preceding claims, where said adjustment mechanism (8) for height adjustment is configured under a dead load of said rotor (3) acting in said work position (5).

12. Agricultural implement according to at least one of the preceding claims, where said chassis (2) comprises front and rear wheels, and where said rear wheels (2c) in said transport position (6) have contact with the ground and said front wheels (2d) are raised in the process.

13. Agricultural implement according to at least one of the preceding claims, where said chassis (2) comprises a rocker (2b) with wheels (2c) mounted thereon, and where said lifting device (4) comprises at least one hydraulic cylinder (4a) for pivoting said rocker.

14. Agricultural implement according to at least one of the preceding claims which is a trailed gyro rake.

15. Agricultural implement according to claim 14, where said gyro rake comprises a front and a rear rotor, and where said chassis (2) and said adjustment mechanism (8) are associated separately with said rear rotor (3).

## Revendications

1. Outil de travail agricole (1) comprenant : un châssis (2) ; un rotor (3) monté sur celui-ci et pouvant tourner autour d'un axe vertical (3a), avec des outils de travail (3b) ; un dispositif de levage hydraulique (4) pour lever le châssis entre une position de travail (5) et une position de transport (6), le dispositif de levage étant disposé sous le rotor et étant raccordé à une conduite hydraulique (7) ; et un mécanisme de réglage (8) pour régler la hauteur du rotor pour la position de travail, le mécanisme de réglage comprenant : un élément de réglage tubulaire (8a) avec au moins un filetage de réglage axial soutenant mutuellement le rotor et le mécanisme de roulement ; et un dispositif d'actionnement (8b) disposé au-dessus du rotor pour la rotation axiale et en particulier sans outil de l'élément de réglage, **caractérisé en ce que** la conduite hydraulique (7) est guidée de haut en bas à travers le rotor et **en ce que** l'élément de réglage (8a) entoure la conduite hydraulique ou par tronçons lui donne la forme.

2. Outil de travail agricole selon la revendication 1, dans lequel la conduite hydraulique (7) est conçue pour le soutien axial mutuel du rotor (3) et du châssis (2).

3. Outil de travail agricole selon la revendication 1 ou 2, dans lequel l'élément de réglage (8a) est une douille filetée (10) entourant la conduite hydraulique (7) et comportant un filetage intérieur (10a) qui agit conjointement avec un filetage extérieur (7a) formé sur la conduite hydraulique.

4. Outil agricole selon la revendication 3, dans lequel la douille filetée (10) comprend en outre un filetage extérieur (10b) tournant en sens inverse, qui coopère avec un filetage intérieur (11a), qui est disposé sur un axe de rotor de manière à ne pas pouvoir tourner (11) ou sur un boîtier pour le logement du rotor (3).

5. Outil de travail agricole selon la revendication 3, dans lequel la douille filetée (10) est montée sur son côté extérieur de manière à pouvoir tourner sur un axe de rotor (11) ou sur un boîtier pour le montage du rotor (3) dans une position en hauteur fixe par rapport au châssis (2) .

6. Outil de travail agricole selon l'une des revendications précédentes, dans lequel la conduite hydraulique (7) est disposée globalement par rapport à l'élément de réglage (8a) de manière à ne pas tourner avec lui.

7. Outil de travail agricole selon la revendication 1 ou 2, dans lequel l'élément de réglage (8a) est réalisé sous la forme d'une broche creuse (17) faisant partie intégrante de la conduite hydraulique (7), et dans lequel celle-ci comprend des passages rotatifs hydrauliques (18) à ses extrémités.

8. Outil agricole selon l'une des revendications précédentes, dans lequel le dispositif d'actionnement (8b) comprend un engrenage conique (15) ou un engrenage à vis sans fin (19) relié à l'élément de réglage (8a).

9. Outil agricole selon l'une quelconque des revendications précédentes, dans lequel le dispositif d'actionnement (8b) comprend un moteur d'entraînement électrique (16).

10. Outil de travail agricole selon l'une des revendications 1 à 7, dans lequel le dispositif d'actionnement (8b) comprend un volant (13) fixé coaxialement à l'élément de réglage (8a).

11. Outil agricole selon au moins l'une des revendications précédentes, dans lequel le mécanisme de réglage (8) est conçu pour le réglage en hauteur sous une charge propre du rotor (3) agissant dans la position de travail (5).

12. Outil agricole selon au moins l'une des revendications précédentes, dans lequel le châssis (2) comprend des roues porteuses avant et arrière, et dans lequel les roues porteuses arrière (2c) sont en contact avec le sol dans la position de transport (6) tandis que les roues porteuses avant (2d) sont relevées.

13. Outil agricole selon au moins l'une des revendications précédentes, dans lequel le châssis (2) comprend un bras oscillant (2b) sur lequel sont montées des roues (2c), et dans lequel le dispositif de relevage (4) comprend au moins un vérin hydraulique (4a) pour faire pivoter le bras oscillant.

14. Outil agricole selon au moins l'une des revendications précédentes, qui est une andaineuse rotative tractée.

15. Outil de travail agricole selon la revendication 14, dans lequel l'andaineuse rotative comprend un rotor avant et un rotor arrière, et dans lequel le châssis (2) et le mécanisme de réglage (8) sont associés séparément au rotor arrière (3).
